(19) Europäisches Patentamt
European Patent Office
Office européen des brevets

(11) **EP 4 596 127 A1**

(12) **EUROPEAN PATENT APPLICATION**

(43) Date of publication:
**06.08.2025 Bulletin 2025/32**

(21) Application number: 24305166.1

(22) Date of filing: **30.01.2024**

(51) International Patent Classification (IPC):
**B09C 1/08** $^{(2006.01)}$     **B09B 3/20** $^{(2022.01)}$
**B09B 101/90** $^{(2022.01)}$     **C09K 17/02** $^{(2006.01)}$

(52) Cooperative Patent Classification (CPC):
**B09C 1/08; B09B 3/20;** B09B 2101/90; C09K 17/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Holcim Technology Ltd
6300 Zug (CH)**

(72) Inventors:
• **DUMAS, Amandine
38070 Saint Quentin Fallavier (FR)**
• **TAPSOBA, Nouffou
38070 Saint Quentin Fallavier (FR)**
• **SERCLERAT, Ivan
38070 Saint Quentin Fallavier (FR)**

(74) Representative: **Regimbeau
20, rue de Chazelles
75847 Paris Cedex 17 (FR)**

(54) **METHOD TO TREAT SOILS POLLUTED BY METALLIC OR METALLOID OXYANIONS**

(57)     The invention relates to a method for treating soil polluted by metallic and/or metalloid oxyanions comprising at least a step (i) of mixing said soil with at least ferrous oxalate.

It also relates to the se of ferrous oxalate to treat soil polluted by metallic and/or metalloid oxyanions.

**Description**

**FIELD OF THE INVENTION**

The present invention concerns a method to treat soils polluted by metallic or metalloid oxyanions.

**BACKGROUND OF THE INVENTION**

Soil decontamination is a growing demand, with high stakes in terms of public health and environmental protection.

In particular, during construction work, builders are required to treat excavated soil before disposing of it.

The release of soluble pollutants following contact with water poses a major potential pollution risk for the environment when contaminated soils are stored for short or long periods, or reused.

To limit this risk, before contaminated soil can be landfilled, its hazard class must be lowered, which means lowering the level of leachable pollutants in the water.

Lowering the hazard class can also enable the soil treated in this way to be reused, for example in road sub-bases or backfill.

Among the elements to be treated are metals and metalloids present in the soil. These metals may be present in the form of oxyanions which are found in various excavated soils.

The use of iron oxides or iron hydroxides is known for oxyanions remediation in polluted soils. The main mechanism for oxyanions remediation is sorption of oxyanions on iron oxides or iron (hydr-)oxides particles. However, the effectiveness of such treatments remains limited with low oxyanion entrapment.

Iron chlorides and iron sulfates can also be used to decrease the mobility of the metal or metalloid oxyanions but, due to the high water solubility of these iron salts, leaching of chloride ions or sulfate ions can occur over time thus leading to an adverse environmental impact and exceeding regulatory threshold values

There is still a need to develop methods to treat soil contaminated by metallic or metalloid oxyanions which are efficient to decrease the mobility of these contaminants in order to prevent their leaching over time and are also safe for the environment with no or limited leaching of any other harmful substance.

**SUMMARY OF THE INVENTION**

The invention is directed to a method for treating soil polluted by metallic and/or metalloid oxyanions comprising at least a step (i) of mixing said soil with at least ferrous oxalate.

Advantageously, ferrous oxalate content in step (i) is from 0,5% to 10%, preferably from 2% to 5%, by weight relative to the weight of said dry soil.

Advantageously, the metallic and/or metalloid oxyanions are selected in the group consisting of antimony (Sb), arsenic (As), chromium (Cr), molybdenum (Mo), selenium (Se), Vanadium (V) or Tungsten (W) oxyanions and their mixtures.

Advantageously, in step (i), water is mixed with the soil and the ferrous oxalate, the water being present to a content from 6% to 50% relatively to the weight of the dry soil.

The pH of the polluted soil is preferably from 3 to 11.

The invention is also directed to the use of ferrous oxalate to treat soil polluted by metallic and/or metalloid oxyanions.

The invention is also directed to the use of the method as described above and below for the stabilization on site or before storing of soil polluted by metallic and/or metalloid oxyanions.

**DEFINITIONS**

<u>Metallic or metalloid oxyanion</u> : anion containing one or more oxygen atoms and/or one or more metallic or metalloid atoms.

Advantageously, the metal or the metalloid is a metal or a metalloid recognized as toxic with an average content in the soils below 1 g/kg. Such metals and metalloids are generally referred to as 'metallic trace elements' even if they encompass both metal and metalloid elements. In some cases, they are also referred to as 'heavy metals'.

Typically, the metal or the metalloid can be antimony (Sb), arsenic (As), barium (Ba), cadmium (Cd), chromium (Cr), copper (Cu), mercury (Hg), lead (Pb), molybdenum (Mo), nickel (Ni), selenium (Se), zinc (Zn), Vanadium (V) or Tungsten (W).

## DETAILED DESCRIPTION

It was discovered that a method for treating soil polluted by metallic and/or metalloid oxyanions comprising at least a step (i) of mixing said soil with at least ferrous oxalate allows efficient oxyanion remediation:

- the metallic and/or metalloid oxyanions have decreased mobility after treatment leading to limited leaching;
- the method allows more efficient oxyanion removal in comparison with methods using other iron components, especially at a low content of the iron component. In particular, ferrous oxalate is more efficient than ferric oxyhydroxide (FeOOH) ferrous oxide ($Fe_2O_3$) or zero valent iron Fe (0);
- there is no release of harmful counter anions compared to other methods using iron chlorides or iron sulfates (with counter anions chlorides or sulfates which are harmful for the environment and strictly regulated). Surprisingly, the oxalate anion is not released.

<u>Method</u>

The invention thus relates to a method for treating soil polluted by metallic and/or metalloid oxyanions comprising at least a step (i) of mixing said soil with at least ferrous oxalate.

The soil to be treated is a soil polluted by metallic and/or metalloid oxyanions as described above.

Advantageously, the metallic and/or metalloid oxyanions are selected in the group consisting of antimony (Sb), arsenic (As) chromium (Cr), molybdenum (Mo), selenium (Se), Vanadium (V) or Tungsten (W) oxyanions and their mixtures.

The soil to be treated can contain one or several of the oxyanions listed above.

The soil can contain molybdenum (Mo) oxyanion as metallic oxyanion and/or antimony (Sb) oxyanion as metalloid oxyanion.

The soil, before or after treatment, does not comprise a hydraulic binder. The terms "does not comprise" mean that the hydraulic binder content in the soil is less than 2% by weight relative to the weight of said dry soil, preferably less than 1% by weight, more preferably 0% by weight.

The expression "hydraulic binder" is understood to mean, according to the present invention, a pulverulent material which, mixed with water, forms a paste which sets and hardens by a series of hydration reactions and processes and which, after hardening, retains its strength and its stability even under water. An example of hydraulic binder is a cement, such as defined in EN 197-5 of May 2021.

Accordingly, the method does not comprise a step of mixing soil with hydraulic binder.

Ferrous oxalate ($FeC_2O_4$) is used for metallic and/or metalloid oxyanion remediation in the method of the invention.

Iron compounds such as iron oxides, iron hydroxides and iron chlorides are known for oxyanions remediation in polluted soils.

Iron salts are expected to precipitate to form iron (hydr-)oxides.

The main mechanism for oxyanions remediation is believed to be sorption of oxyanions on the particles of iron (hydro-)oxide particles.

Without wishing to be bound by any theory, the precipitation of iron (hydr-)oxydes from ferrous oxalate is expected to occur with the formation of weakly crystallized or amorphous iron (hydr-)oxyde particles having a higher specific surface compared to crystalized iron (hydr-)oxyde particles commonly used. The higher specific area thus favors sorption and increases the efficiency of the treatment.

In addition, if the metal or the metalloid element of the oxyanion is sensitive to oxydo-reduction conditions (like Sb, Se or Cr for example), using $FeC_2O_4$ can help to reduce it in a less toxic or a more favorable to sorption form. For instance, Cr III is less soluble than Cr VI.

Advantageously, ferrous oxalate content in step (i) is from 0,5% to 10%, preferably from 2% to 5%, by weight relative to the weight of said dry soil.

Oxyanionic forms of metals and metalloids are more soluble at neutral to alkaline pH than at acidic pH. For remediation efficiency, it is advantageous that the metallic and/or metalloid oxyanions are in a solubilized form.

Advantageously, the pH of the polluted soil is from 3 to 11, preferably from 5 to 9.

In addition, if the pH of the polluted soil is too acidic, typically around and below 2, dissolution of iron (hydr-)oxides may occur, thus releasing the sorbed oxyanions.

For the purposes of the present invention, the mixing step (i) consists of mixing the polluted soil with at least ferrous oxalate until obtaining a homogenous mixture.

Any type of mixer can be used, in particular an industrial mixer, in particular a mixer operating continuously or discontinuously. The mixer can be open or closed.

Mixing can for example be carried out using a fixed or mobile concrete mixer (e.g. concrete mixer) (e.g. mixer truck).

The mixing step can last between 1 minute and 2 hours, for example between 1 minute and 30 minutes, or between 30 and 2 hours, depending on the volume of mixture to be mixed.

Ferrous oxalate can be added to the polluted soil in dry form and mixed with the polluted soil during step (i).

In some embodiments of the invention, in step (i), water is mixed with the soil and the ferrous oxalate, the water being present to a content from 6% to 50% relatively to the weight of the dry soil.

Water has to be present in an amount sufficient to solubilize ferrous oxalate.

The amount of water depends on the type of soil. Typically, a higher amount of water will be necessary for a clayed soil compared to a sandy soil.

Water and ferrous oxalate can be added separately to the soil before mixing step (i) or added continuously during mixing step (i).

In some embodiments, ferrous oxalate can be dissolved in water prior to mixing step (i).

Advantageously, after mixing step (i), the mixture of polluted soil and ferrous oxalate is left to cure, at a temperature between 0°C and 40°C, for a duration ranging from one hour to 2 months.

The duration for curing can range from 2 hours to 56 days, from 6 hours to 30 days, from 6 hours to 10 days, or from rom 24 hours to 96 hours.

Use of ferrous oxalate

Another aspect of the invention concerns the use of ferrous oxalate to treat soil polluted by metallic and/or metalloid oxyanions.

Use of the method

Another aspect of the invention concerns the use of the method as described above for the stabilization on site or before storing of soil polluted by metallic and/or metalloid oxyanions.

Unless otherwise indicated, the ratios indicated in this application are mass ratios and the percentages are mass percentages.

Unless otherwise stated, these mass ratios and mass percentages correspond to ratios and percentages relative to the weight of the dry soil to be treated.

The examples which follow are given for illustrative purposes but should in no way be considered as limiting the present invention.

## EXAMPLES

1. Analysis methods

- Water soil content:

The soil content in water and dry matter were determined according to the method described in standard NF EN 1097-5 (A) of November 1999. The expression "soil dry matter" is abbreviated "DM."

The soil content in water is expressed in weight % relative to the weight of the dry soil.

- Soil pH :

Soil pH can be measured according to standard ISO 10390: dilution of 1 volume of soil in 5 volume of water or potassium chloride solution or calcium chloride solution, agitation for 1h and resting time of one hour, measurement of the solution pH using a pH electrode.

- Leaching tests :

The tests were all conducted in accordance with the recommendations of standard NF EN-12457-2, December 2002.

The tests are carried out on a material in which at least 95% of the particles (by mass) have a size of less than 4 mm.

For analyses and leaching tests, the dry matter (DM) mass of the sample is determined after heating in a 105°C $\pm$ 5°C oven to constant weight in accordance NF EN 1097-5 (A) of November 1999.

From the test specimen, a test sample with a total wet mass containing exactly 0.090 kg $\pm$ 0.005 kg (measured with an accuracy of 0.1 g) of dry matter is prepared.

The leaching test is carried out at room temperature, i.e. 20°C ± 2°C.

The wet test sample with a total mass corresponding to 0.090 kg ± 0.005 kg of dry matter is placed in a bottle and a quantity of leachant (distilled water, demineralized water, deionized water or water of equivalent purity having a pH comprised between 5 and 7.5, conductivity less than 0.5 mS/m) is added to obtain a liquid-solid ratio of 10 L/kg ± 2%. The capped bottle is placed in an agitation device (as defined in the standard) and agitated at roughly 10 rpm for 24 hours ± 0.5 h. To achieve a good chemical equilibrium between the solid and the solution, it is important during extraction to avoid settlement of solids. In addition to the samples, leaching "blanks" are also prepared.

After stopping the agitation, the suspended solids are allowed to settle for 15 minutes ± 5 min, then filtered under vacuum through a 0.45 μm membrane filter.

If filtration is made too difficult, the eluate may be centrifuged at 2000 g for 30 minutes to avoid clogging the 0.45 μm filter. The conditions are specified in standard NF EN-12457-2, December 2002.

The eluate is the solution retrieved at the end of the leaching test.

The eluate is then divided into an appropriate number of sub-samples for different chemical analyses and stored according to EN ISO 5667-3.

The analysis of the eluate produced by the leaching test provides the concentration of the constituents in the eluates, expressed in mg/L. The final results are expressed as the amount of constituent leached relative to the total mass of the sample, in mg/kg of dry matter.

The quantity of a constituent leached from the material, based on the dry mass of the original material, is calculated using the following formula:

$$A = C \times [(L / MD) + (MC / 100)] \quad (1)$$

where:

A is the release of a constituent at a L/S = 10 (in milligrams per kilogram of dry matter);
C is the concentration of a particular constituent in the eluate (in milligrams per liter);
L is the volume of leachant used (in liters);
MC is the moisture content, expressed as a percentage of the dry mass (4.3.2) and calculated as follows: $MC = 100 \times (MW-MD)/MD$
MD is the mass of the dried test sample expressed in kilograms.
MW is the mass of undried test sample expressed in kilograms.

The following analysis are performed on the eluate.

- Eluate pH :

Eluate pH is determined by measuring the pH using a pH electrode as described in the NF EN ISO 10523 standard of May 2012.

- Eluate oxyanion content:

Oxyanion content is measured by ICP-MS following the EN-ISO 17294-2 standard of October 2016.

- Eluate Dissolved Organic Carbon (DOC):

DOC measurement is performed following the NF EN 1484 standard of july 1997.

2. Polluted soils to be treated

Two soils were studied:

- A limestone tunnel boring sludge contaminated with sulfates and molybdenum (geogenic origin) named T1;
- A clayish soil contaminated with antimony (anthropogenic origin) name T2

Soils are analyzed according to the methods described above.

3. Experimental protocol :

Samples of contaminated soil are treated by the method according to the invention.

The water content of the soil to be treated, determined using the method described above, is from 20 to 24%.

Introduce 300-500 g of soil to be treated into a Planetary-type mixer.

Introduce the treatment composition (in powder form) in the proportions indicated in the example tables (% by weight relative to the weight of the dry soil to be treated).

Add water in order to be close to the optimum moisture content Mix at low speed for 1 minute 30 seconds, then stop stirring.

Mix by hand, taking care to scrape down the sides of the bowl.

Mix at low speed for 30 seconds, then stop stirring.

Place the soil sample in a plastic bag sealed against air, water vapor and light.

Place the plastic bag containing the soil sample in a climatic chamber at 20°C±2°C. Samples are cured for 7 days. Leaching test and the eluate analyses described above are then performed.

4. Results

4.1 soil T1 :

The table below provides the results of soil T1 containing Mo oxyanion treated with different iron components.

The results show that ferrous oxalate is more efficient for Mo oxyanion remediation than ferric oxyhydroxide (FeOOH), ferrous oxide ($Fe_2O_3$) or Fe(0) whatever their concentration.

At a concentration of 5%, ferrous oxalate is as efficient as $FeCl_2$ and $Fe(NO_3)_3$ and more efficient than $FeCl_3$ and $FeSO_4$.

At a concentration of 1%, ferrous oxalate is more efficient than $FeCl_2$ and $Fe(NO_3)_3$. There is no release of counter anions compared to treatments with iron chlorides, iron sulfates (for which counter anions chlorides and sulfates are strictly regulated) and iron nitrates.

Surprisingly, the oxalate anion is not released (DOC below the limit of detection).

| Treatments | Counter Anion/European inert waste landfill threshold Limit | Counter Anion release (mg/kg DM) | Iron (II/III/0) | **Molybdenum (mg/kg DM)** | DOC (mg/kg DM) | pH |
|---|---|---|---|---|---|---|
| Reference (no treatment) | / | | / | **1,50** | <50 | 8,4 |
| 5% FeOOH | None | None | Fe III | **0,20** | <50 | 8,4 |
| 5% $Fe_2O_3$ | None | None | Fe III | **1,90** | <50 | 8,5 |
| 5% Fe(0) | None | None | Fe(0) | **0,20** | <50 | 8,3 |
| 5% $FeCl_3$ | Chlorides/ 800mg/kg DM | 34180 | Fe III | **0,30** | <50 | 7,5 |
| 5% $FeSO_4$ | Sulfates/ 1000mg/kg DM | 18217 | Fe II | **1,10** | <50 | 7,8 |
| 5% $Fe(NO_3)_3$ | Nitrates/ Not regulated | 22120 | Fe III | **0,05** | <50 | 7,8 |
| 5% $FeCl_2$ | Chlorides/ 800mg/kg DM | 14000 | Fe II | **0,05** | <50 | 7,4 |
| 8% $FeC_2O_4$ | Oxalate/ Not regulated, bio-degradable | No release detected (DOC) | Fe II | **<0.05** | <50 | 7,4 |
| 5% $FeC_2O_4$ | Oxalate/ Not regulated, bio-degradable | No release detected (DOC) | Fe II | **0,06** | <50 | 7,9 |
| 3% $FeC_2O_4$ | Oxalate/ Not regulated, bio-degradable | No release detected (DOC) | Fe II | **0,09** | <50 | 8,0 |
| 2% $FeC_2O_4$ | Oxalate/ Not regulated, bio-degradable | No release detected (DOC) | Fe II | **0,18** | <50 | 8,1 |
| 1% $FeC_2O_4$ | Oxalate/ Not regulated, bio-degradable | No release detected (DOC) | Fe II | **0,38** | <50 | 8,3 |

(continued)

| Treatments | Counter Anion/European inert waste landfill threshold Limit | Counter Anion release (mg/kg DM) | Iron (II/III/0) | Molybdenum (mg/kg DM) | DOC (mg/kg DM) | pH |
|---|---|---|---|---|---|---|
| 1% FeCl$_2$ | Chlorides/ 800mg/kg DM | 3700 | Fe II | **0,64** | <50 | 8,0 |
| 1% Fe(NO$_3$)$_3$ | Nitrates/ Not regulated | 4000 | Fe III | **1,10** | <50 | 8,0 |

4.2 soil T2 :

The table below provides the results of soil T2 polluted with antimony (Sb) oxyanions treated with different iron components.

The results show that ferrous oxalate is more efficient for Sb oxyanion remediation than ferric oxyhydroxide (FeOOH), ferrous oxide (Fe$_2$O$_3$) or Fe (0) whatever their concentration.

At a concentration of 5%, ferrous oxalate is as efficient as FeCl$_2$, FeCl$_3$, FeSO$_4$ and Fe(NO$_3$)$_3$.

There is no release of counter anions compared to treatments with iron chlorides, iron sulfate (for which counter anions chlorides and sulfates are strictly regulated) and iron nitrate.

Surprisingly, the oxalate anion is not released (DOC at the same magnitude as the untreated soil).

| Treatments | Counter Anion/European inert waste landfill Threshold Limit | Counter Anion release (mg/kg DM) | Iron (II/III/0) | Antimony (mg/kg DM) | DOC (mg/kg DM) | pH |
|---|---|---|---|---|---|---|
| Reference (no treatment) | / | | / | **0,38** | 166 | 7,9 |
| 5% FeOOH | None | None | Fe III | **0,19** | 130 | 8,2 |
| 5% Fe$_2$O$_3$ | None | None | Fe III | **0,22** | 140 | 8,1 |
| 5% Fe (0) | None | None | Fe (0) | **0,30** | 140 | 8,1 |
| 5% FeCl$_3$ | Chlorides/ 800mg/kg DM | 31000 | Fe III | **0,02** | 150 | 6,8 |
| 5% FeSO$_4$ | Sulfates/ 1000mg/kg DM | 13000 | Fe II | **0,04** | 150 | 7,4 |
| 5% Fe(NO$_3$)$_3$ | Nitrates/ Not regulated | 21900 | Fe III | **0,03** | 77 | 7,4 |
| 5% FeCl$_2$ | Chlorides/ 800mg/kg DM | 17000 | Fe II | **0,02** | 290 | 7,0 |
| 8% FeC$_2$O$_4$ | Oxalate/ Not regulated, biodegradable | No release detected (COT) | Fe II | **0,03** | 195 | 7,5 |
| 5% FeC$_2$O$_4$ | Oxalate/ Not regulated, biodegradable | No release detected (COT) | Fe II | **0,05** | 148 | 7,5 |
| 3% FeC$_2$O$_4$ | Oxalate/ Not regulated, biodegradable | No release detected (COT) | Fe II | **0,08** | 127 | 7,7 |
| 2% FeC$_2$O$_4$ | Oxalate/ Not regulated, biodegradable | No release detected (COT) | Fe II | **0,16** | 140 | 7,9 |

**Claims**

1. Method for treating soil polluted by metallic and/or metalloid oxyanions comprising at least a step (i) of mixing said soil with at least ferrous oxalate.

2. Method according to claim 1, **characterized in that** ferrous oxalate content in step (i) is from 0,5% to 10%, preferably from 2% to 5%, by weight relative to the weight of said dry soil.

3. Method according to claim 1 or claim 2, **characterized in that** the metallic and/or metalloid oxyanions are selected in the group consisting of antimony (Sb), arsenic (As), chromium (Cr), molybdenum (Mo), selenium (Se), Vanadium (V) or Tungsten (W) oxyanions and their mixtures.

4. Method according to any one of the preceding claims, **characterized in that**, in step (i), water is mixed with the soil and the ferrous oxalate, the water being present to a content from 6% to 50% relatively to the weight of the dry soil.

5. Method according to any one of the preceding claims, **characterized in that** the pH of the polluted soil is from 3 to 11.

6. Use of ferrous oxalate to treat soil polluted by metallic and/or metalloid oxyanions.

7. Use of the method according to any one of claims 1 to 5 for the stabilization on site or before storing of soil polluted by metallic and/or metalloid oxyanions.

Europäisches
Patentamt

European
Patent Office

Office européen
des brevets

## EUROPEAN SEARCH REPORT

**Application Number**

EP 24 30 5166

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 387 740 A (SASAE TAIICHIRO [JP] ET AL) 7 February 1995 (1995-02-07) | 1-6 | INV.<br>B09C1/08 |
| Y | * columns 4,5; claim 1 * | 7 | B09B3/20 |
| | ----- | | |
| Y | US 5 275 739 A (GRANT DAVID C [US] ET AL) 4 January 1994 (1994-01-04) * claim 1 * | 7 | ADD.<br>B09B101/90<br>C09K17/02 |
| | ----- | | |
| A | JP 2007 268513 A (KOBE STEEL LTD; EARTH TECHNICA KK) 18 October 2007 (2007-10-18) * paragraphs [0053], [0057], [0063], [0068], [0122], [0137]; claims * | 1-7 | |
| | ----- | | |

|  |
|---|
| **TECHNICAL FIELDS SEARCHED (IPC)** |
| B09C<br>B09B<br>F16D<br>C09K |

The present search report has been drawn up for all claims

| Place of search | Date of completion of the search | Examiner |
|---|---|---|
| Munich | 7 June 2024 | Tassinari, Francesca |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5166

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2024

| Patent document cited in search report | | Publication date | Patent family member(s) | | Publication date |
|---|---|---|---|---|---|
| US 5387740 | A | 07-02-1995 | JP | H05309354 A | 22-11-1993 |
| | | | US | 5387740 A | 07-02-1995 |
| US 5275739 | A | 04-01-1994 | CA | 2094091 A1 | 17-10-1993 |
| | | | DE | 4312341 A1 | 21-10-1993 |
| | | | ES | 2055669 A1 | 16-08-1994 |
| | | | JP | H0639055 A | 15-02-1994 |
| | | | US | 5275739 A | 04-01-1994 |
| JP 2007268513 | A | 18-10-2007 | NONE | | |

EPO FORM P0459

For more details about this annex : see Official Journal of the European Patent Office, No. 12/82